# EUROPÄISCHE PATENTSCHRIFT

(11) **EP 2 126 298 B1**
(45) Veröffentlichungstag und Bekanntmachung des Hinweises auf die Patenterteilung: **10.03.2010**
(21) Anmeldenummer: 07847180.2
(22) Anmeldetag: 15.11.2007
(51) Int. Cl.: F01N 3/20, B60K 15/06

(54) **VORRICHTUNG ZUM DOSIEREN EINES REDUKTIONSMITTELS**
DEVICE FOR METERING A REDUCING AGENT
DISPOSITIF DE DOSAGE D'AGENT DE RÉDUCTION

(30) Priorität: 28.12.2006 DE 102006061734
(43) Veröffentlichungstag der Anmeldung: 02.12.2009
(73) Patentinhaber: Robert Bosch GmbH, 70442 Stuttgart (DE)
(72) Erfinder: HAEBERER, Rainer, 75015 Bretten (DE); WALZ, Christian, 76448 Durmersheim (DE); CHAINEUX, Marc, 70329 Stuttgart (DE)
(86) Internationale Anmeldenummer: PCT/EP2007/062406
(87) Internationale Veröffentlichungsnummer: WO 2008/080689

(56) Entgegenhaltungen:
- EP-A- 0 928 884
- DE-C1- 3 605 992
- DE-U1- 8 434 979
- US-B1- 6 508 265

## Beschreibung

### Stand der Technik

Die Erfindung betrifft eine Vorrichtung zum Dosieren eines flüssigen Reduktionsmittels in ein Abgassystem, welches insbesondere zur Reduzierung von Stickoxiden in einem Abgas eines Kraftfahrzeugs eingesetzt werden kann.

Bei Verbrennungskraftmaschinen, insbesondere bei dieselbetriebenen Verbrennungskraftmaschinen, muss aufgrund der in den nächsten Jahren anstehenden verschärften Abgasgesetzgebung unter anderem der Anteil an Stickoxiden im Abgas reduziert werden. Zur Reduzierung des Stickoxid-Anteils im Abgas wird zum Beispiel eine selektive katalytische Reduktion (SCR) durchgeführt, bei der die Stickoxide mit Hilfe von Reduktionsmitteln zu Stickstoff und Wasser reduziert werden. Als Reduktionsmittel wird zum Beispiel eine wässrige Harnstofflösung eingesetzt.

Das Reduktionsmittel wird üblicherweise in einem Tank gelagert und über eine Leitung vom Tank zu einem Dosiermodul befördert, mit dem das Reduktionsmittel zum Beispiel in das Abgasrohr eingespritzt wird. Das System arbeitet üblicherweise mit einem vorgegebenen Systemdruck, welcher beispielsweise über die Drehzahl eines Pumpmotors und entsprechende Sensorsysteme sowie Drosseln realisiert wird.

Eine Problematik besteht dabei darin, dass der im Fahrzeug verfügbare Bauraum für den Tank üblicherweise äußerst begrenzt ist. Aus dem Stand der Technik sind daher Systeme bekannt, bei welchen das flüssige Reduktionsmittel auf zwei verschiedene Tanks verteilt wird. So offenbart beispielsweise EP 0 928 884 A2 eine Gemischabgabevorrichtung zur Einführung eines Reduktionsmittels in ein Abgassystem einer Brennkraftmaschine. Bei dem offenbarten System wird eine Harnstoff-Wasser-Lösung mittels einer Pumpe unter Druck und Zugabe von Druckluft vor einem Katalysator eingebracht, um die Reduktion von Stickoxiden im Abgas der Brennkraftmaschine zu bewirken. Das dargestellte System weist neben einem Reduktionsmittelverbrauchsbehälter zusätzlich einen Reduktionsmittelvorratsbehälter auf, welcher mit dem Reduktionsmittelverbrauchsbehälter in Verbindung steht. Über eine Pumpe und einen Gasspeicher werden der Reduktionsmittelvorratsbehälter und der Reduktionsmittelverbrauchsbehälter mit Druck beaufschlagt. Der Reduktionsmittelverbrauchsbehälter ist mit einem elektrischen Heizelement ausgestattet, welches ein Gefrieren bei niederen Temperaturen verhindert.

Eine Herausforderung bei bekannten Zwei-Tank-Systemen stellt das Management der Reduktionsmittelverteilung auf die beiden Tanks dar. Zum einen muss gewährleistet sein, dass der beheizte Arbeitstank stets mit einer ausreichenden Menge flüssigen Reduktionsmittels beaufschlagt ist, um das Kraftfahrzeug auch während einer unvorhergesehenen Kälteperiode mit ausreichend flüssigem Reduktionsmittel zu versorgen.

Dabei muss jedoch stets sichergestellt sein, dass ein vorgegebener Höchstfüllstand im Arbeitsbehälter nicht überschritten wird. Gleichzeitig muss gewährleistet sein, dass der Arbeitstank keine allzu große Menge an Flüssigkeit beinhaltet, da eine ständige Beheizung einer zu hohen Flüssigkeitsmenge mit erheblichem Energieaufwand verbunden ist. In EP 0 928 884 A2 wird diese Problematik mittels eines Steuergerätes gelöst, welches die Informationen von Füllstandssensoren auswertet und entsprechend ein Umpumpen zwischen den Behältern steuert.

### Offenbarung der Erfindung

Es wird dementsprechend eine Vorrichtung zum Dosieren eines flüssigen Reduktionsmittels in ein Abgassystem vorgeschlagen, insbesondere zur Reduzierung von Stickoxiden in einem Abgas, welche die Nachteile bekannter Vorrichtungen vermeidet und gegenüber bekannten Vorrichtungen, wie beispielsweise der EP 0 928 884 A2, vorteilhaft weitergebildet ist. Die Vorrichtung kann beispielsweise im Rahmen der oben beschriebenen SCR-Verfahren eingesetzt werden, beispielsweise um Harnstoff-Wasser-Lösungen oder andere flüssige oder flüssig/gasförmige Reduktionsmittel oder auch Suspensionen oder Emulsionen von Reduktionsmitteln in ein Abgassystem einzuspritzen.

Die erfindungsgemäße Vorrichtung umfasst mindestens einen Arbeitsbehälter zur Bevorratung einer Arbeitsmenge des flüssigen Reduktionsmittels und mindestens einen Lagerbehälter zur Bevorratung einer die Arbeitsmenge überschreitenden Lagermenge des flüssigen Reduktionsmittels. Die Erfindung betrifft insbesondere die Kommunikation zwischen Lagerbehälter und Arbeitsbehälter. Diese Kommunikation wird über eine Förderpumpe realisiert, wobei auf ein zusätzliches Abschaltventil oder eine zusätzliche Förderpumpe zum Umpumpen verzichtet werden kann. Der Umpumpvorgang kann insbesondere während der Fahrt eines Kraftfahrzeugs stattfinden, das heißt insbesondere während des Dosierbetriebes.

Die erfindungsgemäße Vorrichtung zeichnet sich durch einen einfachen Systemaufbau aus, welcher kostengünstig realisierbar ist. Insbesondere kann auf ein komplexes Steuergerät (welches gleichwohl dennoch vorgesehen sein kann) verzichtet werden, oder die Funktionalität des Steuergerätes (insbesondere die Anforderungen an Software und Ressourcenaufwand) können erheblich reduziert werden. Dennoch ist die vorgeschlagene Vorrichtung, insbesondere aufgrund ihrer einfachen Ausgestaltung, im Rahmen einer Fehlerdiagnose, insbesondere im Rahmen eines On-Board-Diagnosesystems (OBD), leicht zu überwachen.

### Kurze Beschreibung der Zeichnungen

Ein Ausführungsbeispiel der Erfindung ist in der Zeichnung dargestellt und in der nachfolgenden Beschreibung näher erläutert.

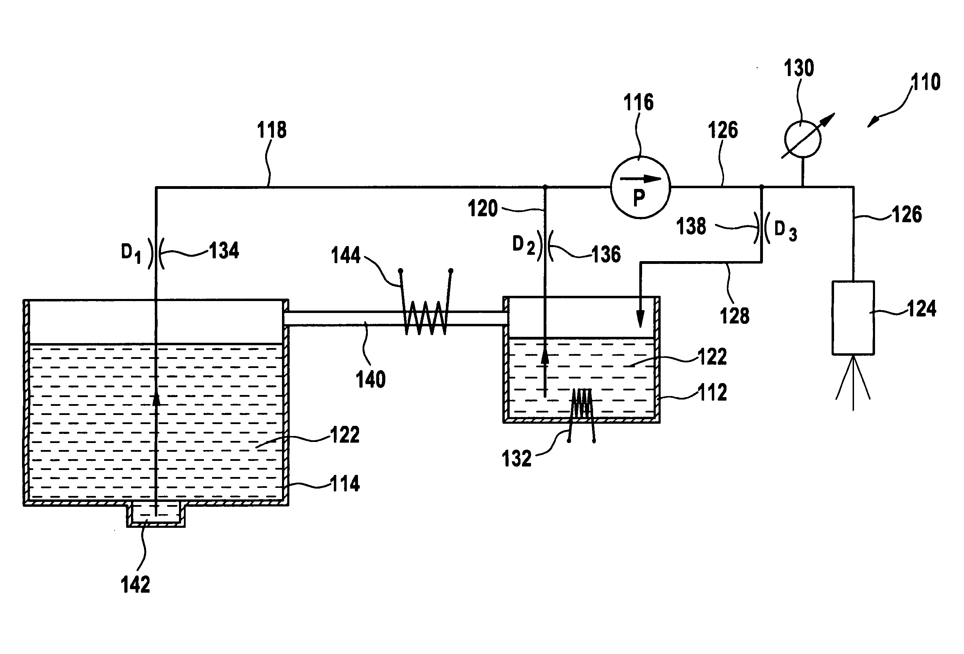

Die einzige Figur (Figur 1) zeigt ein Ausführungsbeispiel einer erfindungsgemäßen Vorrichtung, umfassend einen Lagerbehälter, einen Arbeitsbehälter, eine Förderpumpe und ein Dosiermodul.

### Ausführungsformen der Erfindung

In Figur 1 ist ein bevorzugtes Ausführungsbeispiel einer erfindungsgemäßen Vorrichtung 110 zum Dosieren eines flüssigen Reduktionsmittels in ein Abgassystem dargestellt. Diese Vorrichtung 110 kann beispielsweise im Rahmen der eingangs beschriebenen, aus dem Stand der Technik bekannten Applikationen zur Verminderung von Schadstoffen im Abgas, insbesondere zur Reduzierung von Stickoxiden, eingesetzt werden.

Die erfindungsgemäße Vorrichtung umfasst in diesem Ausführungsbeispiel einen Arbeitsbehälter 112 und einen Lagerbehälter 114. Anstelle jeweils eines Behälters sind auch Ausführungsbeispiele mit mehreren Behältern möglich, beispielsweise im Rahmen von Systemen, welche auf einer getrennten Lagerung verschiedener Substanzen beruhen, welche anschließend vor einem Eindosieren gemischt werden.

Weiterhin umfasst die Vorrichtung 110 eine Förderpumpe 116, welche (vorzugsweise gleichzeitig) über eine Lageransaugleitung 118 aus dem Lagerbehälter 114 und über eine Arbeitsansaugleitung 120 aus dem Arbeitsbehälter 112 flüssiges Reduktionsmittel 122 ansaugen kann. Beispielsweise kann es sich dabei, wie oben beschrieben, um eine wässrige Harnstofflösung handeln, welche beispielsweise eingesetzt werden kann, um den Schadstoff NOx in einem Katalysator zu N₂ und H₂O zu reduzieren. Als Förderpumpe 116 haben sich dabei insbesondere Membranpumpen bewährt, wobei jedoch auch andere Pumpensysteme eingesetzt werden können.

Die Förderpumpe 116 ist auf ihrer Druckseite über eine Dosierleitung 126 mit einem Dosiermodul 124 verbunden, welches beispielsweise im Abgastrakt einer Verbrennungskraftmaschine angeordnet sein kann. Für die Ausgestaltung derartiger Dosiermodule, bei welchen es sich beispielsweise um Einspritzdüsen handeln kann, kann auf den Stand der Technik verwiesen werden, beispielsweise auf die in EP 0 928 884 A2 genannten Einspritzvenfile.

Weiterhin ist eine von der Dosierleitung 126 abzweigende Rücklaufleitung 128 vorgesehen, welche im Arbeitsbehälter 112 mündet. Der Druck in der Dosierleitung 126 kann mit einem oder mehreren Drucksensoren 130 überwacht werden. In dem in Figur 1 gezeigten Ausführungsbeispiel ist einer dieser Drucksensoren 130 zwischen der Abzweigung der Rücklaufleitung 128 und dem Dosiermodul 124 angeordnet.

Der Drucksensor 130 kann beispielsweise über eine einfache Regelung mit der Förderpumpe 116 in Verbindung stehen, beispielsweise um eine Drehzahl dieser Förderpumpe 116 zu regeln und somit die Fördermenge beziehungsweise den Druck in der Dosierleitung 126 einzustellen. Auch komplexere Regelsysteme sind realisierbar, welche beispielsweise auch elektronische Steuergeräte, beispielsweise Mikrocomputer, umfassen können.

Der Arbeitsbehälter 112 ist dabei von seinem maximalen Fassungsvermögen her derart dimensioniert, dass dieser vorteilhafterweise für den Betrieb des Kraftfahrzeugs für eine Wintersaison ausreichend flüssiges Reduktionsmittel zur Verfügung stellen kann. Typischerweise liegt das maximale Fassungsvermögen im Bereich zwischen 1 und 15 I, besonders bevorzugt bei (maximal) 6 I. Auf diese Weise kann in der kalten Jahreszeit der Betrieb des Kraftfahrzeugs lediglich mit der im Arbeitsbehälter 112 bevorrateten Menge an flüssigem Reduktionsmittel 122 aufrechterhalten werden, so dass lediglich der Arbeitsbehälter 112 mit einer Arbeitsbehälterheizung 132 (in Figur 1 lediglich symbolisch dargestellt) ausgestattet werden sollte. Auf eine Heizung des Lagerbehälters 114 kann verzichtet werden.

In der Lageransaugleitung 118, der Arbeitsansaugleitung 120 und der Rücklaufleitung 128 sind jeweils Drosselelemente 134, 136, 138 angeordnet, welche beispielsweise als Drosselelemente mit vorgegebenem Drosselquerschnitt oder auch als einstellbare (beispielsweise regelbare) Drosselelemente ausgestaltet sein können und welche in Figur 1 mit D₁, D₂ beziehungsweise D₃ bezeichnet sind.

Die Förderpumpe 116 saugt während des (Normal-)Betriebs sowohl aus dem Lagerbehälter 114 als auch aus dem Arbeitsbehälter 112 flüssiges Reduktionsmittel 122 an. Dabei sind die Ansaugleitungen 118, 120 derart aufeinander abgestimmt (beispielsweise durch entsprechende Ausgestaltungen der Drosselelemente 134, 136), dass aus dem Lagerbehälter 114 stets (entsprechende Füllstände in den Behältern 114, 112 vorausgesetzt) eine größere Menge entnommen wird als aus dem Arbeitsbehälter 112.

Der Lagebehälter 114 hat ein Fassungsvermögen, welches das maximale Fassungsvermögen des Arbeitsbehälters 112 übersteigt. Vorzugsweise liegt das maximale Fassungsvermögen des Lagerbehälters im Bereich zwischen 15 I und 100 I, insbesondere im Bereich zwischen 20 I und 50 I.

Der Arbeitsbehälter 112 und der Lagerbehälter 114 sind über eine oder mehrere Überlaufleitungen 140, welche insbesondere als einfache hydraulische Überlaufleitung ausgestaltet ist, miteinander verbunden. Aufgrund der Abstimmung der Drosselelemente 134, 136 und 138 relativ zueinander führt die aus dem Lagerbehälter 114 entnommene Mehrmenge an flüssigem Reduktionsmittel 122 dazu, dass der Arbeitsbehälter 112 unter Normalbedingungen stets bis zur Einmündung der Überlaufleitung 140 in diesen Arbeitsbehälter 112 gefüllt ist.

Dementsprechend kann diese Einmündung der Überlaufleitung 140 in den Arbeitsbehälter 112 den maximalen Füllstand des Arbeitsbehälters 112 definieren. Alternativ könnten jedoch auch Füllstandssensoren, beispielsweise im Arbeitsbehälter 112 und/oder im Lagerbehälter 114, vorgesehen sein. Die maximale Füllmenge des Arbeitsbehälters 112 ist in der dargestellten Ausgestaltung somit unabhängig vom Füllstand des Lagerbehälters 114. Der maximale Füllstand im Arbeitsbehälter 112 ist bestimmt durch die axiale Lage der Einmündung der Überlaufleitung 140.

Dabei sind vorzugsweise die beiden Behälter 112, 114 derart zueinander angeordnet, dass der maximale Füllstand des Lagerbehälters 114 (welcher beispielsweise durch entsprechende Sensoren überwacht werden kann) stets unterhalb oder gleich dem Füllstand des Arbeitsbehälters 112 ist. Damit ist gewährleistet, dass die in den Arbeitsbehälter 112 über die Rücklaufleitung 128 zurückfließende Menge an flüssigem Reduktionsmittel 122 stets über die Überlaufleitung 140 in den Lagerbehälter 114 zurückfließen kann und es somit zu keiner Überfüllung des Arbeitsbehälters 112 kommen kann. Auf entsprechende Sensoren im Arbeitsbehälter 112 könnte somit verzichtet werden.

Während normaler Betriebsbedingungen, das heißt beispielsweise oberhalb einer Temperatur von -11 °C, also bei einer Temperatur, bei welcher eine wässrige Harnstofflösung im flüssigen Zustand ist, wird somit der Arbeitsbehälter 112 im Dosierbetrieb (das heißt beispielsweise während einer Fahrt) vom Lagerbehälter 114 der Vorrichtung 110 über die Rücklaufleitung 128 gespeist. Gefriert der (in diesem bevorzugten Ausführungsbeispiel unbeheizte) Lagerbehälter 114 ein, so wird der Dosierbetrieb lediglich vom beheizten Arbeitsbehälter 112 gespeist, da die Lageransaugleitung 118 innerhalb des Lagerbehälters 114 ebenfalls eingefroren und somit verschlossen ist. Die Förderpumpe 116 gleicht diesen Querschnittsverlust in den Ansaugleitungen 118, 120, beispielsweise geregelt über den Drucksensor 130, vorzugsweise durch eine erhöhte Drehzahl aus. Ist der Lagerbehälter 114 eingefroren, so verliert in der Regel auch die Überlaufleitung 140 ihre Funktion.

Vorzugsweise ist der Lagerbehälter 114 und insbesondere die Ansaugstelle 142 der Lageransaugleitung 118 im Lagerbehälter 114 derart ausgeführt beziehungsweise isoliert, dass die Ansaugstelle 142 zeitlich vor der Überlaufleitung 140 einfriert. Umgekehrt sollte bei einer Erhöhung der Temperatur die Überlaufleitung 140 nicht nach dem Lagertank 114 auftauen. Diese zeitliche Abfolge der Einfrier- beziehungsweise Auftauvorgänge kann beispielsweise durch eine entsprechende Ausgestaltung der Isolierung des Lagerbehälters 114 im Bereich der Ansaugstelle 142 gestaltet werden.

Alternativ oder zusätzlich kann, wie in Figur 1 dargestellt, die Überlaufleitung 140 auch als ganz oder teilweise beheizte Überlaufleitung 140 ausgestaltet sein, beispielsweise durch Verwendung einer Überlaufheizung 144 (in Figur 1 lediglich symbolisch angedeutet). Durch diese bevorzugten Ausgestaltungen wird gewährleistet, dass auch bei einem Einfrieren der Vorrichtung 110 ein Überfüllen des Arbeitsbehälters 112 vermieden wird.

Abschließend sei noch darauf hingewiesen, dass in dem in Figur 12 dargestellten Ausführungsbeispiel die Abzweigung der Rücklaufleitung 128 von der Dosierleitung 126 als zwischen der Förderpumpe 116 und dem Dosiermodul 124 liegend dargestellt ist. Abweichend von dieser bevorzugten Ausgestaltung kann diese Abzweigung jedoch auch unterschiedlich ausgestaltet sein. So kann die Abzweigung beispielsweise auch innerhalb des Dosiermoduls 124 selbst angeordnet sein, also Teil des Dosiermoduls 124 sein. Alternativ oder zusätzlich können auch weitere Rücklaufleitungen 128 vorgesehen sein, beispielsweise eine Leckage-Rücklaufleitung aus dem Dosiermodul 124 in den Arbeitsbehälter 112.

## Patentansprüche

1. Vorrichtung (110) zum Dosieren eines flüssigen Reduktionsmittels (122) in ein Abgassystem, insbesondere zur Reduzierung von Stickoxiden in einem Abgas, umfassend mindestens einen Arbeitsbehälter (112) zur Bevorratung einer Arbeitsmenge des flüssigen Reduktionsmittels (122), mindestens einen Lagerbehälter (114) zur Bevorratung einer vorzugsweise die Arbeitsmenge übersteigenden Lagermenge des flüssigen Reduktionsmittels (122), mindestens ein Dosiermodul (124) und mindestens eine Förderpumpe (116), wobei die Förderpumpe (116) eingerichtet ist, um flüssiges Reduktionsmittel (122) über mindestens eine Lageransaugleitung (118) aus dem Lagerbehälter (114) und über mindestens eine Arbeitsansaugleitung (120) aus dem Arbeitsbehälter (112) anzusaugen und über mindestens eine Dosierleitung (126) dem Dosiermodul (124) zuzuführen, wobei die Dosierleitung (126) über mindestens eine Rücklaufleitung (128) mit dem Arbeitsbehälter (112) verbunden ist, und wobei der Arbeitsbehälter (112) über mindestens eine Überlaufleitung (140) mit dem Lagerbehälter (114) verbunden ist.

2. Vorrichtung (110) gemäß dem vorhergehenden Anspruch, **dadurch gekennzeichnet, dass** die Lageransaugleitung (118) und die Arbeitsansaugleitung (120) derart dimensioniert sind, insbesondere unter Verwendung mindestens einer in der Lageransaugleitung (118) angeordneten Lagerdrossel (134) und mindestens einer in der Arbeitsansaugleitung (120) angeordneten Arbeitsdrossel (136), dass die von der Förderpumpe (116) aus dem Lagerbehälter (114) angesaugte Menge an flüssigem Reduktionsmittel (122) im Betrieb stets größer ist als die aus dem Arbeitsbehälter (112) angesaugte Menge.

3. Vorrichtung (110) gemäß einem der beiden vorhergehenden Ansprüche, **gekennzeichnet durch** mindestens eine in der Rücklaufleitung (128) aufgenommene Rücklaufdrossel (138) zur Einstellung einer aus der Dosierleitung (126) in den Arbeitsbehälter (112) rückgeführten Menge flüssigen Reduktionsmittels (122).

4. Vorrichtung (110) gemäß einem der vorhergehenden Ansprüche, **dadurch gekennzeichnet, dass** der Lagerbehälter (114) und die Überlaufleitung (140) derart eingerichtet sind, dass auch bei maximalem Füllstand des Lagerbehälters (114) ein Überlaufen des Arbeitsbehälters (112) durch die Überlaufleitung (140) in den Lagerbehälter (114) ermöglicht ist.

5. Vorrichtung (110) gemäß einem der vorhergehenden Ansprüche, **dadurch gekennzeichnet, dass** der maximale Füllstand des Lagerbehälters (114) stets unterhalb oder gleich dem maximalen Füllstand des Arbeitsbehälters (112) ist.

6. Vorrichtung (110) gemäß einem der vorhergehenden Ansprüche, **dadurch gekennzeichnet, dass** der Arbeitsbehälter (112) ganz oder teilweise beheizbar ist.

7. Vorrichtung (110) gemäß einem der vorhergehenden Ansprüche, **dadurch gekennzeichnet, dass** der Lagerbehälter (114) und die Überlaufleitung (140) derart ausgestaltet sind, dass bei einem Wärmeentzug durch Temperaturabsenkung zunächst eine Ansaugstelle (142) der Lageransaugleitung (118) im Lagerbehälter (114) und anschließend die Überlaufleitung (140) einfriert und dass bei einer Wärmezufuhr durch Temperaturerhöhung zunächst die Überlaufleitung (140) und anschließend die Ansaugstelle (142) der Lageransaugleitung (118) im Lagerbehälter (114) auftaut.

8. Vorrichtung (110) gemäß einem der vorhergehenden Ansprüche, **dadurch gekennzeichnet, dass** die Überlaufleitung (140) ganz oder teilweise beheizbar ist.

9. Vorrichtung (110) gemäß dem vorhergehenden Anspruch, **dadurch gekennzeichnet, dass** der Arbeitsbehälter (112) ein Fassungsvermögen für den Bedarf eines Betriebs eines Kraftfahrzeugs für eine Wintersaison aufweist, insbesondere ein Fassungsvermögen im Bereich von 1 bis 15 Litern, vorzugsweise im Bereich zwischen 5 und 8 Litern und besonders bevorzugt bei 6 Litern.

10. Vorrichtung (110) gemäß einem der vorhergehenden Ansprüche, **dadurch gekennzeichnet, dass** in der Dosierleitung (126) mindestens ein Drucksensor (130) vorgesehen ist, vorzugsweise zwischen der Abzweigung der Rücklaufleitung (128) und dem Dosiermodul (124).

## Claims

1. Device (110) for metering a liquid reducing agent (122) into an exhaust system, in particular for the reduction of nitrogen oxides in an exhaust gas, comprising at least one working tank (112) for storing a working quantity of the liquid reducing agent (122), at least one store tank (114) for storing a stored quantity, which preferably exceeds the working quantity, of the liquid reducing agent (122), at least one metering module (124) and at least one feed pump (116), with the feed pump (116) being designed to suck liquid reducing agent (122) out of the store tank (114) via at least one store suction line (118) and out of the working tank (112) via at least one working suction line (120) and to supply said liquid reducing agent (122) to the metering module (124) via at least one metering line (126), with the metering line (126) being connected to the working tank (112) via at least one return line (128) and with the working tank (112) being connected to the store tank (114) via at least one overflow line (140).

2. Device (110) according to the preceding claim, **characterized in that** the store suction line (118) and the working suction line (120) are dimensioned, in particular using at least one store throttle (134) which is arranged in the store suction line (118) and at least one working throttle (136) which is arranged in the working suction line (120), such that the quantity of liquid reducing agent (122) sucked out of the store tank (114) by the feed pump (116) during operation is always greater than the quantity sucked out of the working tank (112).

3. Device (110) according to one of the two preceding claims, **characterized by** at least one return throttle (138), which is held in the return line (128), for adjusting a quantity of liquid reducing agent (122) which is returned from the metering line (126) into the working tank (112).

4. Device (110) according to one of the preceding claims, **characterized in that** the store tank (114) and the overflow line (140) are designed such that an overflow of the working tank (112) into the store tank (114) through the overflow line (140) is enabled even when the store tank (114) is at the maximum filling level.

5. Device (110) according to one of the preceding claims, **characterized in that** the maximum filling level of the store tank (114) is always below or equal to the maximum filling level of the working tank (112).

6. Device (110) according to one of the preceding claims, **characterized in that** the working tank (112) is fully or partially heatable.

7. Device (110) according to one of the preceding claims, **characterized in that** the store tank (114) and the overflow line (140) are designed such that, in the event of a withdrawal of heat as a result of a temperature reduction, firstly a suction point (142) of the store suction line (118) in the store tank (114) and subsequently the overflow line (140) freezes, and such that, in the event of a supply of heat as a result of a temperature increase, firstly the overflow line (140) and subsequently the suction point (142) of the store suction line (118) in the store tank (114) thaws.

8. Device (110) according to one of the preceding claims, **characterized in that** the overflow line (140) is fully or partially heatable.

9. Device (110) according to the preceding claim, **characterized in that** the working tank (112) has a holding capacity for the requirements of the operation of a motor vehicle for a winter season, in particular a holding capacity in the range from 1 to 15 litres, preferably in the range between 5 and 8 litres and particularly preferably of 6 litres.

10. Device (110) according to one of the preceding claims, **characterized in that** at least one pressure sensor (130) is provided in the metering line (126), preferably between the branching point of the return line (128) and the metering module (124).

## Revendications

1. Dispositif (110) pour le dosage d'un agent de réduction fluide (122) dans un système de gaz d'échappement, notamment pour la réduction d'oxydes d'azote dans un gaz d'échappement, comprenant au moins un récipient de travail (112) pour fournir une quantité de travail de l'agent de réduction fluide (122), au moins un récipient de stockage (114) pour fournir une quantité de stockage de l'agent de réduction fluide (122) dépassant de préférence la quantité de travail, au moins un module de dosage (124) et au moins une pompe de refoulement (116), la pompe de refoulement (116) étant prévue pour aspirer de l'agent de réduction fluide (122) par le biais d'au moins une conduite d'aspiration de stockage (118) hors du récipient de stockage (114) et par le biais d'au moins une conduite d'aspiration de travail (120) hors du récipient de travail (112), et pour l'acheminer par le biais d'au moins une conduite de dosage (126) au module de dosage (124), la conduite de dosage (126) étant connectée par le biais d'au moins une conduite de retour (128) au récipient de travail (112), et le récipient de travail (112) étant connecté par le biais d'au moins une conduite de débordement (140) au récipient de stockage (114).

2. Dispositif (110) selon la revendication précédente, **caractérisé en ce que** la conduite d'aspiration de stockage (118) et la conduite d'aspiration de travail (120) sont dimensionnées de telle sorte, en particulier en utilisant au moins un étranglement de stockage (134) disposé dans la conduite d'aspiration de stockage (118) et au moins un étranglement de travail (136) disposé dans la conduite d'aspiration de travail (120), que la quantité d'agent de réduction fluide (122) aspirée par la pompe de refoulement (116) hors du récipient de stockage (114) soit toujours supérieure, pendant le fonctionnement, à la quantité aspirée hors du récipient de travail (112).

3. Dispositif (110) selon l'une quelconque des deux revendications précédentes, **caractérisé par** au moins un étranglement de retour (138) reçu dans la conduite de retour (128) pour ajuster une quantité d'agent de réduction fluide (122) ramenée hors de la conduite de dosage (126) dans le récipient de travail (112).

4. Dispositif (110) selon l'une quelconque des revendications précédentes, **caractérisé en ce que** le récipient de stockage (114) et la conduite de débordement (140) sont conçus de telle sorte que même dans le cas d'un niveau de remplissage maximum du récipient de stockage (114), un débordement du récipient de travail (112) à travers la conduite de débordement (140) est rendu possible dans le récipient de stockage (114).

5. Dispositif (110) selon l'une quelconque des revendications précédentes, **caractérisé en ce que** le niveau de remplissage maximum du récipient de stockage (114) est toujours en dessous ou égal au niveau de remplissage maximum du récipient de travail (112).

6. Dispositif (110) selon l'une quelconque des revendications précédentes, **caractérisé en ce que** le récipient de travail (112) peut être chauffé complètement ou en partie.

7. Dispositif (110) selon l'une quelconque des revendications précédentes, **caractérisé en ce que** le récipient de stockage (114) et la conduite de débordement (140) sont configurés de telle sorte que dans le cas d'une extraction de chaleur par diminution de la température, un point d'aspiration (142) de la conduite d'aspiration de stockage (118) dans le récipient de stockage (114) gèle en premier, suivi de la conduite de débordement (140), et **en ce que** dans le cas d'un apport de chaleur par augmentation de la température, la conduite de débordement (140) dégivre en premier, suivi du point d'aspiration (142) de la conduite d'aspiration de stockage (118) dans le récipient de stockage (114).

8. Dispositif (110) selon l'une quelconque des revendications précédentes, **caractérisé en ce que** la conduite de débordement (140) peut être chauffée complètement ou en partie.

9. Dispositif (110) selon l'une quelconque des revendications précédentes, **caractérisé en ce que** le récipient de travail (112) présente une contenance pour les besoins d'un fonctionnement d'un véhicule automobile pendant la saison d'hiver, en particulier une contenance de l'ordre de 1 à 15 litres, de préférence de l'ordre de 5 à 8 litres et particulièrement préférablement de 6 litres.

10. Dispositif (110) selon l'une quelconque des revendications précédentes, **caractérisé en ce que** dans la conduite de dosage (126) est prévu au moins un capteur de pression (130) de préférence entre la dérivation de la conduite de retour (128) et le module de dosage (124).
